# EUROPÄISCHE PATENTANMELDUNG

(11) **EP 4 112 626 A1**
(43) Veröffentlichungstag der Anmeldung: **04.01.2023**
(21) Anmeldenummer: 21182837.1
(22) Anmeldetag: 30.06.2021
(51) Int. Cl.: C07F 7/18, C08K 5/103, C08L 1/00, C08L 1/12, C08L 9/06, C08L 21/00

(54) **ORGANOSILYLPOLYSULFIDE UND DIESE ENTHALTENDE KAUTSCHUKMISCHUNGEN**

(71) Anmelder: LANXESS Deutschland GmbH, 50569 Köln (DE)
(72) Erfinder: MOLL, Irene, 41468 Neuss (DE); MEIERS, Michaela, 52076 Aachen (DE); WEIDENHAUPT, Hermann-Josef, 50259 Pulheim (DE)

(57) **Zusammenfassung**

Die neuen Organosilylpolysulfide der Formel (I) 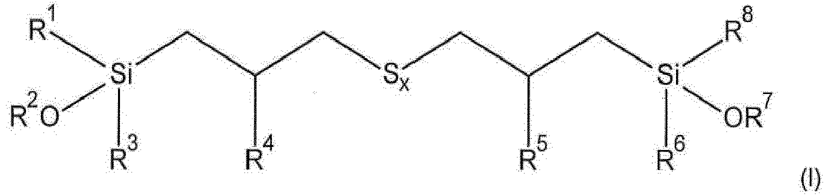 worin die Substituenten R¹ bis R⁸ und der Index x die in der Beschreibung angegebenen Bedeutungen haben,
eignen sich hervorragend zur Herstellung von Kautschukmischungen mit verbesserten Mischungseigenschaften, daraus erhältlichen Vulkanisaten und Kautschukprodukten die sich durch höhere Härte, Festigkeit und Bruchdehnung und einem geringen Rollwiderstand der daraus hergestellten Reifen auszeichnen

## Beschreibung

Die vorliegende Erfindung betrifft neue Organosilylpolysulfide und deren Verwendung als Verstärkungsadditve für Kautschuk, diese Organosilylpolysulfide enthaltende Kautschukmischungen sowie die Verwendung dieser Organosilylpolysulfide zur Herstellung dieser Kautschukmischungen, aus diesen Kautschukmischungen erhältliche Vulkanisate und Formkörper, insbesondere Reifen.

Schwefelhaltige Organosiliciumverbindungen, die als Verstärkungsadditive in Kautschukmischungen eingesetzt werden können, sind bekannt. So werden in der DE-A 2141159, DE-A 2141160 und DE-A 2255577 schwefelhaltige Organosilane als Verstärkungsadditive insbesondere für kieselsäurehaltige Kautschukvulkanisate für Reifenanwendungen beschrieben. Die dort offenbarten schwefelhaltigen Organosilane leiten sich von Bis(trialkoxysilylalkyl)polysulfiden ab, explizit beschrieben ist z.B. das Bis(triethoxysilylpropyl)tetrasulfid (TESPT).

Auch die DE-A 2035778 offenbart Verstärkungsadditive auf Organosilanbasis die sich von Trialkoxysilylpropyl-Verbindungen ableiten. Nachteilig an diesen aus dem Stand der Technik bekannten Verbindungen ist, dass die Hystereseverluste nicht nur bei hohen Temperaturen (ca. 60°C, korrelierend mit dem Rollwiderstand), sondern auch bei tiefen Temperaturen (0°C) vermindert werden. Eine Verminderung der Hystereseverluste ist im Prinzip erwünscht, da sie zur Verminderung des Rollwiderstands von Kfz-Reifen und damit zu einem geringeren Treibstoffverbrauch der Fahrzeuge führt. Es ist jedoch bekannt, dass eine geringe Hysterese bei tiefen Temperaturen (0 bis 20°C) mit einem schlechten Nassrutschverhalten der Kfz-Reifen einhergeht. Somit ist es schwierig gleichzeitig beide Anforderungen, einen niedrigen Rollwiderstand und ein gutes Nassrutschverhalten, miteinander zu vereinbaren.

In der EP-A 447066 wird ebenfalls die Verwendung schwefelhaltiger Organosilane als Haftverbesserer in Kautschukmischungen zur Herstellung von in hohem Maße Kieselsäuregefüllten Reifenlaufflächen beschrieben. Durch die Kombination eines speziellen, silanmodifizierten Kautschuks, eines Kieselsäure-Füllstoffs und Haftverbesserern auf Basis spezieller Trialkoxyalkylpolysulfide gelang es dort, den Rollwiderstand des Reifens zu verringern Auch in diesen Reifenmischungen zeigt sich aber, dass die genannten Haftverbesserer nicht nur den Rollwiderstand senken, sondern auch die Nasshaftung verringern.

Aus der EP-A 0680997 ist ebenfalls die Verwendung bestimmter Bis-Alkoxy/Alkyl-substituierter Silylmethylenpolysulfide als Verstärkungsadditive für Kautschukmischungen mit gutem Rollwiderstand und guter Nasshaftung bekannt. Nachteilig ist hier einerseits, dass die zur Herstellung der Verstärkungsadditive eingesetzten Rohstoffe aufwändig über eine Photochlorierung hergestellt werden müssen und andererseits die Kautschuke eine erhebliche Verschlechterung der anwendungstechnischen Eigenschaften wie Festigkeit, Bruchdehnung und Härte aufweisen.

In der EP-A 3622015 ist die Verwendung von Bis-(dimethylethoxysilyl-isobuty!en)-polysulfid als Verstärkungsadditiv für Kautschukmischungen mit gutem Rollwiderstand und guten Nasshaftungseigenschaften beschrieben. Allerdings werden beim Einsatz dieser Verbindungen bei der Reifenherstellung pro Mol jeweils 2 Mol Ethanol freigesetzt, was in der Praxis von Nachteil sein kann.

Somit bestand die Aufgabe der vorliegenden Erfindung darin neue Verstärkungsadditive für Kautschuke auf Basis schwefelhaltiger Organosiliciumverbindungen, sowie neue Kautschukmischungen, bereitzustellen, welche die oben genannten Nachteile des Stands der Technik überwinden.

Überraschenderweise wurde gefunden, dass bestimmte Organosilylpolysulfide, die jeweils eine Propylengruppe oder jeweils eine in 2-Position verzweigte Propylengruppe als Spacer zwischen den Silicium- und den Schwefelatomen aufweisen, sehr gut als Verstärkungsadditive für in Kautschukmischungen geeignet sind, ohne dass es bei der Vulkanisation der Kautschukmischung zur Emission flüchtiger organischer Komponenten (VOC) kommt.

Die neuen Organosilylpolysulfide bewirken eine schnelle Ausvulkanisationszeit (T95) der Kautschukmischungen und führen bei den daraus erhältlichen Vulkanisaten zu vorteilhaften temperaturabhängigen Hystereseeigenschaften und zu positiven anwendungstechnischen Eigenschaften, wie hoher Festigkeit und hoher Bruchdehnung. Insbesondere zeichnen sich aus diesen Vulkanisaten hergestellte Reifen durch einen geringen Rollwiderstand und gute Nasshaftung aus. Darüber hinaus zeichnen sich die neuen Organosilylpolysulfide durch sehr vorteilhafte niedrige Mischungsviskositäten aus, was eine einfachere Mischungsherstellung ermöglicht.

Gegenstand der vorliegenden Erfindung sind daher neue Organosilylpolysulfide der Formel (I) 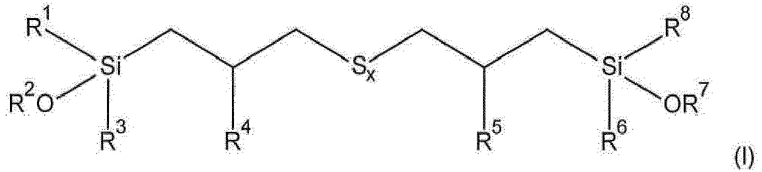 worin
R¹, R³, R⁶ und R⁸ gleich oder verschieden sind und für C₁-C₄-Alkyl stehen, R⁴ und R⁵ gleich oder verschieden sind und für Wasserstoff oder C₁-C₄-Alkyl stehen,
R² und R⁷ für einen Rest der Formel (A)

H₂₇C₁₃-(OCH₂-CH₂)ₙ- (A)

stehen,
worin
n für eine ganze Zahl von 1 bis 9, bevorzugt von 2 bis 8 und besonders bevorzugt für 5 steht
und
x für eine ganze Zahl von 2 bis 8 steht.

Bevorzugt sind Organosilylpolysulfide der Formel (I),
worin
R1, R³, R⁶ und R⁸ gleich oder verschieden sind und für Methyl oder Ethyl stehen, R⁴ und R⁵ gleich oder verschieden sind und für Wasserstoff, Methyl oder Ethyl stehen, R² und R⁷ für einen Rest der Formel (A) stehen,
worin
n für eine ganze Zahl von 2 bis 8, besonders bevorzugt für 5 steht
und
x für eine ganze Zahl von 2 bis 8 steht.

Besonders bevorzugt sind Organosilylpolysulfide der Formel (I), worin
R¹, R³, R⁶ und R⁸ für Methyl stehen,
R⁴ und R⁵ gleich oder verschieden sind und für Wasserstoff oder Methyl stehen,
R² und R⁷ für einen Rest der Formel (A) stehen,
worin
n für 3, 5, 6, 6.5, 7, 8, besonders bevorzugt für 5 steht
und
x für eine ganze Zahl von 2 bis 8 steht.

Ganz besonders bevorzugt sind Organosilylpolysulfide der Formel (I), worin
R¹, R³, R⁶ und R⁸ für Methyl stehen,
R⁴ und R⁵ gleich sind und für Wasserstoff oder Methyl stehen,
R² und R⁷ für einen Rest der Formel (A) stehen,
worin
n für 5 steht
und
x für eine ganze Zahl von 2 bis 8 steht.

Insbesondere bevorzugt sind Organosilylpolysulfide der Formel (Ia) und (Ib) 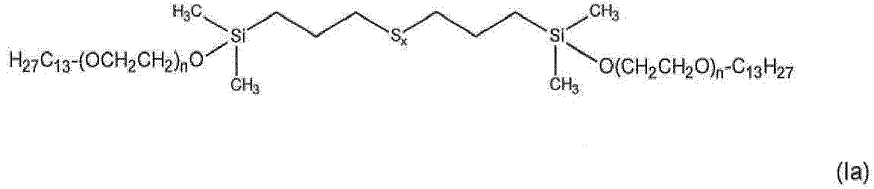 worin
x für eine ganze Zahl von 2 bis 8 steht,
und
n für 5 steht,
mit der chemischen Bezeichnung, mit der chemischen Bezeichnung Bis[penta(ethyleneoxy)-tridecanoyl-dimethylsilylpropyl]polysulfid
und 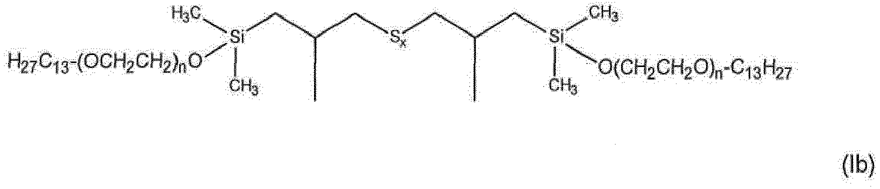 worin
x für eine ganze Zahl von 2 bis 8 steht, und
n für 5 steht,
mit der chemischen Bezeichnung mit der chemischen Bezeichnung Bis[penta(ethyleneoxy)-tridecanoyl-dimethylsilylisobutylpropyl]polysulfid.

Dem Fachmann ist bekannt, dass Organosilylpolysulfide unter dem Einfluss von Temperatur und/oder Lösungsmitteln disproportionieren können. Die erfindungsgemäßen Organosilylpolysulfide liegen daher zumeist als Mischungen vor, wobei die Anzahl der Schwefelatome in den Organosilylpolysulfiden sich um einen Zahlenmittelwert bewegt, der im Allgemeinen 3,6 bis 4,4, bevorzugt 3,8 bis 4,2 und insbesondere 4,0 beträgt.

Weiterer Gegenstand der vorliegenden Erfindung sind Mischungen enthaltend mindestens zwei Organosilylpolysulfide der Formel (I), worin die Substituenten R¹ bis R⁸ und x die oben angegebenen allgemeinen und bevorzugten Bedeutungen haben und die sich zumindest in dem Wert von x unterscheiden, wobei der Zahlenmittelwert x̅ der Anzahl x der Schwefelatome 3,6 bis 4,4, bevorzugt 3,8 bis 4,2 und insbesondere 4,0 beträgt.

Besonders bevorzugt sind Mischungen enthaltend mindestens zwei Organosilyipolysulfide der Formel (Ia) und/oder der Formel (Ib), die sich durch den Wert x unterscheiden, wobei der Zahlenmittelwert x̅ der Anzahl x der Schwefelatome 3,6 bis 4,4, bevorzugt 3,8 bis 4,2 und insbesondere 4,0 beträgt.

Die erfindungsgemäßen Organosilylpolysulfide der Formel (I) können hergestellt werden indem man mindestens zwei Halogenalkylsilylether der Formel (II) 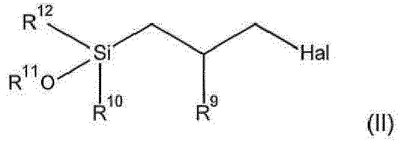 worin
R⁹ für einen Rest R⁴ oder R⁵ steht,
R¹⁰ für einen Rest R³ oder R⁶ steht,
R¹¹ für einen Rest R² oder R⁷ steht und
R¹² für einen Rest R¹ oder R⁸ steht, wobei die Reste R¹ bis R⁸ die für Formel (I) angegebenen allgemeinen und bevorzugten Bedeutungen haben
und
Hal für Halogen, bevorzugt für Chlor steht,
mit mindestens einem Metallpolysulfid der Formel (III)

SₓM₂ (III)

worin
x die für Formel (I) angegebene allgemeine und bevorzugte Bedeutung hat,
und
M für ein Metallion aus der Reihe Lithium, Natrium und Kalium, vorzugsweise Natrium, steht,
in Gegenwart von mindestens einem alkoholischen Lösungsmittel umsetzt.

Verfahren zur Herstellung von Organosilylpolysulfiden sind im Prinzip bekannt. Die erfindungsgemäßen Organosilylpolysulfide der Formel (I) können in Analogie zu den bekannten Verfahren (wie z.B. in der DE-A 2 141 159 beschrieben) hergestellt werden.

Im Allgemeinen wird zur Herstellung der erfindungsgemäßen Organosilylpolysulfide bezogen auf ein Mol der Gesamtmenge an Halogenalkylsilylether der Formel (II) 0,5 Mol an Metallpolysulfid der Formel (III), besonders bevorzugt Natriumpolysulfid, eingesetzt.

Das Verfahren zur Herstellung der erfindungsgemäßen Organosilylpolysulfide kann in einem weiten Temperaturbereich durchgeführt werden. Vorzugsweise wird es bei einer Temperatur im Bereich von -20 bis +90°C durchgeführt.

Das Verfahren zur Herstellung der erfindungsgemäßen Organosilylpolysulfide wird bevorzugt in Gegenwart mindestens eines Alkohols aus der Reihe Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol und/oder 1,6-Hexandiol durchgeführt.

Das Verfahren zur Herstellung der erfindungsgemäßen Organosilylpolysulfide kann in einem weiten Druckbereich durchgeführt werden. Im Allgemeinen wird es bei einem Druck von 0,9 bis 1,1 Bar, vorzugsweise bei Normaldruck durchgeführt.

Im Allgemeinen erfolgt die Herstellung der erfindungsgemäßen Organosilylpolysulfide (I) indem man zunächst das Metallpolysulfid der Formel (III) in einem wasserfreien Alkohol, vorzugsweise in wasserfreiem Methanol vorlegt und unter inerten Bedingungen zum Sieden erhitzt und dann mindestens zwei Halogenalkylsilylether der Formel (II) hinzugibt. Nach erfolgter Umsetzung wird das abgeschiedene Alkalimetallsalz als Nebenprodukt abfiltriert und die Verbindungen der Formel (I) destillativ vom Lösungsmittel getrennt und als verbleibendes Sumpfprodukt in einer Ausbeute von > 85% rein isoliert.

Die Halogenalkylsilylether der Formel (II) sind neu und ebenfalls Gegenstand der vorliegenden Erfindung.

Verfahren zur Herstellung von Halogenalkylsilylethern sind im Prinzip bekannt.

Die erfindungsgemäßen Halogenalkylsilylether der Formel (II) können in bekannter Weise hergestellt werden, z.B. analog zu dem in der EP-A 0669338 beschriebenen Verfahren, durch Umsetzung mindestens einer Halogen-Allylverbindung der Formel (IV) 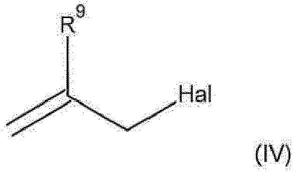 worin R⁹ die für Formel (II) angegebene allgemeine und bevorzugte Bedeutung hat
und
Hal für Halogen, bevorzugt für Chlor steht,
mit mindestens einem Silan der Formel (V) 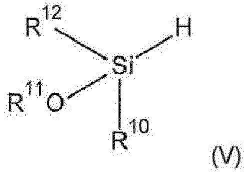 worin R¹⁰, R¹¹ und R¹² die für Formel (II) angegebenen allgemeinen und bevorzugten Bedeutungen haben,
in Gegenwart mindestens eines Ruthenium-Katalysators.

Die Herstellung der erfindungsgemäßen Halogenalkylsilylether der Formel (II) erfolgt vorzugsweise ohne Zusatz eines Lösungsmittels.

Im Allgemeinen werden pro Mol an Halogen-Allylverbindung der Formel (IV) 1,15 bis 2,0 Mol, vorzugsweise 1,6 bis 2,0 Mol an Silan der Formel (V) eingesetzt.

Als Ruthenium-Katalysatoren eignen sich vorzugsweise die in der EP-A 0669338 aufgeführten Verbindungen. Insbesondere eignet sich zur Herstellung der erfindungsgemäßen Halogenalkylsilylether der Formel (II) der Ruthenium-Katalysator Ru₃(CO)₁₂,

Im Allgemeinen werden pro Mol an Halogen-Allylverbindung der Formel (IV) 10 bis 200 ppm, vorzugsweise 15 bis 100 ppm an mindestens einem Ruthenium-Katalysator eingesetzt.

Die Umsetzung der Halogen-Allylverbindungen der Formel (IV) mit den Silanen der Formel (V) erfolgt im Allgemeinen bei einer Temperatur im Bereich von 20 °C bis 150°C, bevorzugt von 70 bis 90°C.

Die Umsetzung erfolgt im Allgemeinen über einen Zeitraum von 1 bis 100 Stunden, vorzugsweise über einen Zeitraum von 1,5 bis 5 Stunden.

Der Reaktionsverlauf kann mittels DC (Dünnschichtchromatographie) verfolgt werden. Nach vollständiger Umsetzung kann der Halogenalkylsilylether der Formel (II) destillativ aufgereinigt werden. Es können so Ausbeuten bis zu 97% realisiert werden.

Die Halogen-Allylverbindung der Formel (IV) sind bekannt und können z.B. als Handelsprodukte der Firma Sigma-Aldrich (CAS-Nr.: 107-05-1 bzw. CAS-Nr.: 563-47-3) käuflich erworben werden.

Die Silane der Formel (V) können in bekannter Weise hergestellt werden durch Umsetzung von Halogensilanen der Formel (VI) 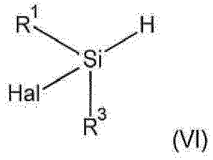 worin
R¹ und R³ die für Formel (I) angegebenen allgemeinen und bevorzugten Bedeutungen haben
und
Hal für Halogen, bevorzugt für Chlor steht,
mit einem Alkohol der Formel R¹¹OH, worin R¹¹ die für Formel (I) angegebenen allgemeinen und bevorzugten Bedeutungen hat.

Silane der Formel (VI) sind bekannt und können als Handelsprodukte z.B. der Firma Sigma-Aldrich käuflich erworben werden.

Gegenstand der vorliegenden Erfindung sind weiterhin **Kautschukmischungen** enthaltend mindestens einen Kautschuk und mindestens eine Verbindung der Formel (I) 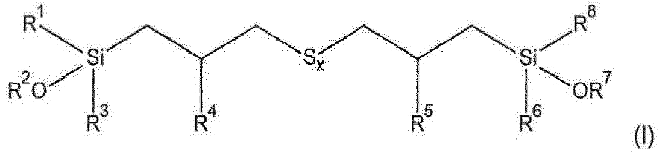 worin die Substituenten R¹ bis R⁸ und der Index x die oben angegebenen allgemeinen und bevorzugten Bedeutungen haben.

Im Allgemeinen beträgt der Gesamtgehalt an Verbindungen der Formel (I) in den erfindungsgemäßen Kautschukmischungen 0,1 bis 18 Gew.-Teile, vorzugsweise 1 bis 17 Gew.-Teile, besonders bevorzugt 2 bis 16 Gew.-Teile und ganz besonders bevorzugt 3 bis 15 Gew.-Teile, jeweils bezogen auf 100 Gew.-Teile der Gesamtmenge an Kautschuk.

Die Verbindungen der Formel (I) können sowohl in reiner Form als auch aufgezogen auf einen inerten organischen oder anorganischen Träger den Kautschukmischungen zugesetzt werden. Als Trägermaterialien eignen sich insbesondere Kieselsäuren, natürliche oder synthetische Silikate, Aluminiumoxid sowie Ruße.

Die erfindungsgemäßen Kautschukmischungen enthalten mindestens einen Kautschuk.

Bevorzugt enthalten die erfindungsgemäßen Kautschukmischungen mindestens einen Naturkautschuk (NR) und/oder Synthesekautschuk.

Als Synthesekautschuke kommen beispielsweise
BR - Polybutadien
ABR - Butadien/Acrylsäure-C₁-C₄-alkylester-Copolymerisat
CR - Polychloropren
IR - Polyisopren
SBR - Styrol/Butadien-Copolymerisate mit Styrolgehalten von 1 - 60, vorzugsweise 20-50 Gew-%
IIR - Isobutylen/Isopren-Copolymerisate
NBR - Butadien/Acrylnitril-Copolymerisate mit Acrylnitrilgehalten von 5 bis 60 Gew.-%, vorzugsweise 10-50 Gew.-%
HNBR - teilhydrierter oder vollständig hydrierter NBR-Kautschuk
EPDM - Ethylen/Propylen/Dien-Copolymerisate
sowie Mischungen aus zwei oder mehr dieser Kautschuke in Frage.

Bevorzugt enthalten die erfindungsgemäßen Kautschukmischungen mindestens einen SBR-Kautschuk, bevorzugt einen funktionalisierten SBR-Kautschuk und ggf. einen oder mehrere BR-Kautschuke.

Unter funktionalisiertem SBR-Kautschuk ist erfindungsgemäß ein SBR-Kautschuk zu verstehen der an der Hauptkette und/oder an den Endgruppen durch eine oder mehrere funktionelle Gruppen, insbesondere Carboxylgruppen und/oder mercaptanhaltige Gruppen substituiert ist.

Die erfindungsgemäßen Kautschukmischungen enthalten ganz besonders bevorzugt Mischungen von SBR- und BR-Kautschuken im Gewichtsverhältnis SBR:BR von 100:0 bis 60:40.

In einer weiteren vorteilhaften Ausführungsform enthalten die erfindungsgemäßen Kautschukmischungen mindestens einen Naturkautschuk.

Die erfindungsgemäßen Kautschukmischungen enthalten vorzugsweise einen oder mehrere Füllstoffe. Prinzipiell eigenen sich alle aus dem Stand der Technik für diesen Zweck bekannten Füllstoffe.

Als aktive Füllstoffe eignen sich insbesondere hydroxylgruppenhaltige oxidische Verbindungen wie spezielle Kieselsäuren und weiterhin Ruße.

Die erfindungsgemäßen Kautschukmischungen enthalten im Allgemeinen 10 bis 190 Gew.-Teile, vorzugsweise 30 bis 150 Gew.-Teile und besonders bevorzugt 50 bis 130 Gew.-Teile an mindestens einem Füllstoff, jeweils bezogen auf 100 Gew.-Teile der Gesamtmenge an Kautschuk.

Bevorzugt enthalten die erfindungsgemäßen Kautschukmischungen mindestens einen hydroxylgruppenhaltigen oxidischen Füllstoff.

Im Allgemeinen beträgt der Gehalt an hydroxylgruppenhaltigen oxidischen Füllstoffen in den erfindungsgemäßen Kautschukmischungen mindestens 10 Gew.-Teile, vorzugsweise 20 bis 150 Gew.-Teile, besonders bevorzugt 50 bis 140 Gew.-Teile und ganz besonders bevorzugt 80 bis 130 Gew.-Teile, jeweils bezogen auf 100 Gew.-Teile des Gesamtfüllstoffgehalts. Als hydroxylgruppenhaltige oxidische Füllstoffe eignen sich bevorzugt solche aus der Reihe der
- Kieselsäuren, mit einer spezifischen Oberfläche (BET) von 5 bis 1000, vorzugsweise 20 bis 400 m²/g und mit Primärteilchengrößen von 100 bis 400 nm, wobei die Kieselsäuren gegebenenfalls auch als Mischoxide mit anderen Metalloxiden, wie AI-, Mg-, Ca-, Ba-, Zn-, Zr-, Ti-oxiden vorliegen,
   und
- synthetischen Silikate, wie Aluminiumsilikat, Erdalkalisilikate wie Magnesiumsilikat oder Calciumsilikat, mit spezifischen Oberflächen (BET) von 20 bis 400 m²/g und Primärteilchendurchmessern von 10 bis 400 nm.

Bei den in den erfindungsgemäßen Kautschukmischungen enthaltenen hydroxylgruppenhaltigen oxidischen Füllstoffen aus der Reihe der Kieselsäuren handelt es sich bevorzugt um solche die z.B. durch Fällung von Lösungen von Silikaten oder Flammenhydrolyse von Siliciumhalogeniden hergestellt werden können.

Bevorzugt enthalten die erfindungsgemäßen Kautschukmischungen mindestens einen hydroxylgruppenhaltigen oxidischen Füllstoff aus der Reihe der Kieselsäuren mit einer spezifischen Oberfläche (BET) im Bereich von 20 bis 400 m2/g in einer Menge von 5 bis 150 Gew.-Teilen, bevorzugt 50 bis 140 Gew.-Teilen und besonders bevorzugt von 80 bis 130 Gew.-Teilen, jeweils bezogen auf 100 Gew.-Teile der Gesamtmenge an Kautschuk.

Die erfindungsgemäßen Kautschukmischungen können als Füllstoff weiterhin mindestens einen Ruß enthalten.

Erfindungsgemäß bevorzugt sind Ruße die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße.

Im Allgemeinen enthalten die erfindungsgemäßen Kautschukmischungen mindestens einen Ruß mit einer spezifische Oberfläche (BET) im Bereich von 20 bis 200 m²/g in einer Menge von 0 bis 40 Gew.-Teilen, bevorzugt von 0 bis 30 Gew.-Teilen und besonders bevorzugt von 0 bis 20 Gew.-Teilen, jeweils bezogen auf 100 Gew.-Teile der Gesamtmenge an Kautschuk.

Alle Angaben zur BET beziehen sich auf die spezifische Oberfläche gemessen nach DIN 66131. Die Angaben zur Primärteilchengröße beziehen sich auf mittels Rasterelektronenmikroskop ermittelte Werte.

In einer bevorzugten alternativen Ausführungsform enthalten die erfindungsgemäßen Kautschukmischungen als Füllstoffe mindestens einen der oben genannten Ruße und mindestens eine der oben genannten Kieselsäuren.

In einer besonders bevorzugten alternativen Ausführungsform ententhalten die erfindungsgemäßen Kautschukmischungen mindestens einen hydroxylgruppenhaltigen oxidischen Füllstoff aus der Reihe der Kieselsäuren mit einer spezifischen Oberfläche (BET) im Bereich von 20 bis 400 m²/g in einer Menge von 20 bis 120 Gew.-Teilen, bevorzugt 30 bis 100 Gew.-Teilen und besonders bevorzugt von 40 bis 90 Gew.-Teilen, und mindestens einen Ruß mit einer spezifische Oberfläche (BET) im Bereich von 20 bis 200 m²/g in einer Menge von 20 bis 90 Gew.-Teilen, bevorzugt von 30 bis 80 Gew.-Teilen und besonders bevorzugt von 40 bis 70 Gew.-Teilen, jeweils bezogen auf 100 Gew.-Teile der Gesamtmenge an Kautschuk.

Die erfindungsgemäßen Kautschukmischungen können einen oder mehrere **Vernetzer** enthalten.

Erfindungsgemäß bevorzugte Vernetzer sind insbesondere Schwefel und Schwefelspender sowie Metalloxide wie Magnesiumoxid und/oder Zinkoxid.

Schwefel kann in elementarer löslicher oder unlöslicher Form oder in Form von Schwefelspendern eingesetzt werden. Als Schwefelspender kommen beispielsweise Dithiodimorpholin (DTDM), 2-Morpholinodithiobenzothiazol (MBSS), Caprolactamdisulfid, Dipentamethylenthiuramtetrasulfid (DPTT) und Tetramethylthiuramdisulfid (TMTD) in Frage.

Besonders bevorzugt enthalten die erfindungsgemäßen Kautschukmischungen mindestens einen Schwefelspender und/oder Schwefel, insbesondere Schwefel.

Die erfindungsgemäßen Kautschukmischungen enthalten im Allgemeinen 0,1 bis 10 Gew.-Teile, bevorzugt 0,2 bis 5 Gew. Teile an mindestens einem der genannten Vernetzer, jeweils bezogen auf 100 Gew.-Teile der Gesamtmenge an Kautschuk.

Die erfindungsgemäßen Kautschukmischungen können einen oder mehrere **Vulkanisationsbeschleuniger** enthalten.

Erfindungsgemäß bevorzugte Vulkanisationsbeschleuniger sind Mercaptobenzthiazole, Mercaptosulfenamide, Thiocarbamate, Thiocarbonate und Dithiophosphate sowie Schwefelspender wie Dithiodicaprolactame, Dithiodimorpholine und Xanthogenate.

Die erfindungsgemäßen Kautschukmischungen enthalten im Allgemeinen 0,1 bis 10 Gew. Teile, bevorzugt 0,2 bis 5 Gew.-Teile an mindestens einem der genannten Vulkanisationsbeschleuniger, jeweils bezogen auf 100 Gew.-Teile der Gesamtmenge an Kautschuk.

Die erfindungsgemäßen Kautschukmischungen können außer den Verbindungen der Formel (I) auch noch ein oder mehrere weitere für diese Zwecke übliche, aus dem Stand der Technik bekannte, **Verstärkungsadditive** enthalten.

Die erfindungsgemäßen Kautschukmischungen können außer den oben genannten Zusatzstoffen noch weitere, dem Fachmann geläufige **Kautschukhilfsmittel** enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Reaktionsverzögerer, Metalloxide, Aktivatoren wie Triethanolamin, Polyethylenglykol, Hexantriol sowie Füllstoffe aus der Gruppe der natürlichen Silikate, wie Kaolin und andere natürlich vorkommende Kieselsäuren und weiterhin Glasfasern und Glasfaserprodukte z.B. in Form von Matten, Strängen oder Mikrokugeln.

Die erfindungsgemäßen Kautschukmischungen enthalten die genannten Kautschukhilfsmittel in den für diese Hilfsmittel üblichen Mengen, typischerweise jeweils in einer Menge von 0,1 bis 30 Gew,-Teilen, jeweils bezogen auf 100 Gew.-Teile der Gesamtmenge an Kautschuk.

Die erfindungsgemäßen Kautschukmischungen können einen oder mehrere **Sekundärbeschleuniger** enthalten.

In Kieselsäure-basierten Kautschukmischungen, wie sie zur Reifenherstellung eingesetzt werden, wird typischerweise Diphenylguanidin (DPG) oder strukturähnliche aromatische Guanidine als Sekundärbeschleuniger eingesetzt, um die Vernetzungsgeschwindigkeit und die Mischungsviskosität innerhalb des Mischprozesses gezielt einstellen zu können. Ein sehr entscheidendes, negatives Merkmal beim Einsatz von DPG ist jedoch, dass dieses während der Vulkanisation Anilin freisetzt, das im Verdacht steht karzinogen zu sein. Nun wurde überraschender Weise gefunden, dass bei den erfindungsgemäßen Kautschukmischungen DPG durch 1,6-bis(N,N-dibenzylthiocarbamoyldithio)-hexan (Handelsname Vulcuren^{®}) vorteilhaft substituiert werden kann. Ein Ersatz von DPG durch Zweitbeschleuniger wie TBzTD (Tetrabenzylthiuramdisulfid) oder Dithiophosphate ist auch möglich.

Die vorliegende Erfindung umfasst daher auch im wesentlichen DPG-freie Kautschukmischungen.

Die erfindungsgemäßen Kieselsäure-basierenden Kautschukmischungen enthalten vorzugsweise mindestens eine Sekundärbeschleuniger aus der Reihe 1,6-bis(N,N-dibenzylthiocarbamoyldithio)-hexane (Handelsname Vulcuren^{®}),Tetrabenzylthiuramdisulfid (TBzTD) und Dithiophosphate.

Die erfindungsgemäßen Kautschukmischungen enthalten im Allgemeinen 0,1 bis 1,0 Gew.-Teile, bevorzugt 0,2 bis 0,5 Gew.-Teile an mindestens einem der genannten Sekundärbeschleuniger, jeweils bezogen auf 100 Gew.-Teile der Gesamtmenge an Kautschuk.

Gegenstand der vorliegenden Erfindung sind daher auch erfindungsgemäße Kautschukmischungen, die im Wesentlichen frei sind von Diphenylguanidin und/oder substituierten Diphenylguanidinen insbesondere solche, die einen Gehalt an Diphenylguanidin und/oder substituierten Diphenylguanidinen von maximal 0,4 Gew.-Teilen, vorzugsweise von 0,1 bis 0,2 Gew.-Teilen, besonders bevorzugt von 0,05 bis 0,1 Gew.-Teilen und ganz besonders bevorzugt von 0,001 bis 0,04 Gew.-Teilen aufweisen, jeweils bezogen auf 100 Gewichtsteile der Gesamtmenge an Kautschuk.

Bevorzugt sind erfindungsgemäße Kautschukmischungen enthaltend mindestens einen Kautschuk, 5 bis 150 Gew.-Teile, vorzugsweise 50 bis 140 Gew.-Teile und besonders bevorzugt 80 bis 130 Gew.-Teile mindestens einer Kieselsäure, 0 bis 40 Gew.-Teile, bevorzugt 0 bis 30 Gew.-Teile und besonders bevorzugt 0 bis 20 Gew.-Teile Ruß und 0,1 bis 15, vorzugsweise 1 bis 12, besonders bevorzugt 2 bis 10 Gew.-Teile und insbesondere 3 bis 8 Gew.-Teile mindestens einer Verbindung der Formel (I), jeweils bezogen auf 100 Gew.-Teile der Gesamtmenge an Kautschuk.

Ebenfalls bevorzugt sind erfindungsgemäße Kautschukmischungen enthaltend mindestens einen Kautschuk, 5 bis 150 Gew.-Teile, vorzugsweise 50 bis 140 Gew.-Teile und besonders bevorzugt 80 bis 130 Gew.-Teile mindestens einer Kieselsäure, 0 bis 40 Gew.-Teile, bevorzugt 0 bis 30 Gew.-Teile und besonders bevorzugt 0 bis 20 Gew.-Teile Ruß und 0,1 bis 18, vorzugsweise 1 bis 17 besonders bevorzugt 2 bis 16 Gew.-Teile und insbesondere 3 bis 15 Gew.-Teile mindestens einer Verbindung der Formel (I) und 0,1 bis 1,0 Gew.-Teile 1,6-bis(N,N-dibenzylthiocarbamoyldithio)-hexane (Vuicuren^{®}), jeweils bezogen auf 100 Gew.-Teile der Gesamtmenge an Kautschuk.

Ganz besonders bevorzugt sind erfindungsgemäße Kautschukmischungen enthaltend mindestens einen Kautschuk, insbesondere mindestens einen SBR-Kautschuk, bevorzugt einen funktionalisierten SBR-Kautschuk und ggf. einen oder mehrere BR-Kautschuke, 5 bis 150 Gew.-Teile vorzugsweise 50 bis 140 Gew.-Teile und besonders bevorzugt 80 bis 130 Gew.-Teile mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm, 0 bis 40 Gew.-Teile, bevorzugt 0 bis 30 Gew.-Teile und besonders bevorzugt 0 bis 20 Gew.-Teile Ruß, insbesondere mit einer spezifische Oberfläche (BET) im Bereich von 20 bis 200 m²/g, und 0,1 bis 15, vorzugsweise 1 bis 14, besonders bevorzugt 2 bis 13 Gew.-Teile und insbesondere 3 bis 11 Gew.-Teile an mindestens einer Verbindung der Formel(I), insbesondere der Formel (Ia) (Bis[penta(ethyleneoxy)-tridecanoyl-dimethylsilyl-propyl]polysulfid, und/oder der Formel (Ib) (Bis[penta(ethyleneoxy)-tridecanoyl-dimethylsilyiisobutyl]polysulfid, jeweils bezogen auf 100 Gew.-Teile der Gesamtmenge an Kautschuk.

Weiterhin ganz besonders bevorzugt sind erfindungsgemäße Kautschukmischungen enthaltend mindestens einen Kautschuk, insbesondere mindestens einen SBR-Kautschuk, bevorzugt einen funktionalisierten SBR-Kautschuk und ggf. einen oder mehrere BR-Kautschuke, 5 bis 150 Gew.-Teile, vorzugsweise 50 bis 140 Gew.-Teile und besonders bevorzugt 80 bis 130 Gew.-Teile mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm, 0 bis 40 Gew.-Teile, bevorzugt 0 bis 30 Gew.-Teile und besonders bevorzugt 0 bis 20 Gew.-Teile Ruß, insbesondere mit einer spezifische Oberfläche (BET) im Bereich von 20 bis 200 m²/g, und 0,1 bis 18, vorzugsweise 1 bis 17, besonders bevorzugt 2 bis 16 Gew.-Teile und insbesondere 3 bis 15 Gew.-Teile an mindestens einer Verbindung der Formel(I), insbesondere der Formel (Ia) (Bis[penta(ethyleneoxy)-tridecanoyl-dimethylsilylpropyl)polysulfid) und/oder der Formel (Ib) (Bis[penta(ethyleneoxy)-tridecanoyl-dimethyisilylisobutyl]polysulfid) und 0,1 bis 0,5 Gew.-Teile 1,6-bis(N,N-dibenzylthiocarbamoyldithio)-hexane (Vulcuren^{®}) und einem Gehalt an Diphenylguanidin und/oder substituierten Diphenylguanidinen von maximal 0,4 Gew.-Teilen, vorzugsweise von 0,1 bis 0,2 Gew.-Teilen, besonders bevorzugt von 0,05 bis 0.1 Gew.-Teilen und ganz besonders bevorzugt von 0,001 bis 0,04 Gew.-Teilen, jeweils bezogen auf 100 Gew.-Teile der Gesamtmenge an Kautschuk.

Ebenfalls ganz besonders bevorzugt sind erfindungsgemäße Kautschukmischungen enthaltend mindestens einen Naturkautschuk, 5 bis 150 Gew.-Teile, vorzugsweise 50 bis 140 Gew.-Teile und besonders bevorzugt 80 bis 130 Gew.-Teile mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm, 0 bis 40 Gew.-Teile, bevorzugt 0 bis 30 Gew.-Teile und besonders bevorzugt 0 bis 20 Gew.-Teile Ruß, insbesondere mit einer spezifische Oberfläche (BET) im Bereich von 20 bis 200 m²/g, und 0,1 bis 18, vorzugsweise 1 bis 17, besonders bevorzugt 2 bis 16 Gew.-Teile und insbesondere 3 bis 15 Gew.-Teile an mindestens einer Verbindung der Formel(I), insbesondere der Formel (la) (Bis[penta(ethyleneoxy)-tridecanoyl-dimethylsilylpropyljpolysulfid) und/oder der Formel (Ib) (Bis[penta(ethyleneoxy)-tridecanoyl-dimethylsilylisobutyljpolysulfid), jeweils bezogen auf 100 Gew.-Teile der Gesamtmenge an Kautschuk.

Weiterhin ganz besonders bevorzugt sind erfindungsgemäße Kautschukmischungen enthaltend mindestens einen Naturkautschuk, 5 bis 150 Gew.-Teile, vorzugsweise 50 bis 140 Gew.-Teile und besonders bevorzugt 80 bis 130 Gew.-Teile mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm, 0 bis 40 Gew.-Teile, bevorzugt 0 bis 30 Gew.-Teile und besonders bevorzugt 0 bis 20 Gew.-Teile Ruß, insbesondere mit einer spezifische Oberfläche (BET) im Bereich von 20 bis 200 m²/g, und 0,1 bis 18, vorzugsweise 1 bis 17, besonders bevorzugt 2 bis 16 Gew.-Teile und insbesondere 3 bis 15 Gew.-Teile an mindestens einer Verbindung der Formel(I), insbesondere der Formel (Ia) (Bis[penta(ethyleneoxy)-tridecanoyl-dimethylsilyipropyljpolysulfid) und/oder der Formel (Ib) (Bis[penta(ethyleneoxy)-tridecanoyl-dimethylsilylisobutyl]polysulfid) und 0,1 bis 0,5 Gew.-Teile 1,6-bis(N,N-dibenzylthlocarbamoyldithio)-hexane (Vulcuren^{®}) und einem Gehalt an Diphenylguanidin und/oder substituierten Diphenylguanidinen von maximal 0,4 Gew.-Teilen, vorzugsweise von 0,1 bis 0,2 Gew.-Teilen, besonders bevorzugt von 0,05 bis 0.1 Gew.-Teilen und ganz besonders bevorzugt von 0,001 bis 0,04 Gew.-Teilen, jeweils bezogen auf 100 Gew.-Teile der Gesamtmenge an Kautschuk.

Ein weiterer Gegenstand der vorliegenden Erfindung ist ein Verfahren zur Herstellung der erfindungsgemäßen Kautschukmischungen, durch Mischen von mindestens einem der oben allgemein und bevorzugt genannten Kautschuke mit mindestens einem der oben allgemein und bevorzugt genannten Füllstoffe und mindestens einer Verbindung der Formel (I) und gegebenenfalls mit mindestens einem der oben allgemein und bevorzugt genannten Verstärkungsadditive, gegebenenfalls einem oder mehreren der oben allgemein und bevorzugt genannten Vulkanisationsbeschleunigern und gegebenenfalls einem oder mehreren der oben allgemein und bevorzugt genannten Sekundärbeschleunigern und gegebenenfalls einem oder mehreren der oben genannten Kautschukhilfsmittel in den für diese Zusatzstoffe genannten allgemeinen und bevorzugten Mengen und Erhitzen der so hergestellten Mischung auf eine Temperatur im Bereich von 60 bis 200°C, besonders bevorzugt von 90 bis 180°C.

Typischerweise werden zur Herstellung der erfindungsgemäßen Kautschukmischungen pro 100 Gew.-Teile an der Gesamtmenge an Kautschuk 10 bis 190 Gew.-Teile, bevorzugt 30 bis 150 Gew.-Teile und besonders bevorzugt 50 bis 130 Gew.-Teile an mindestens einem Füllstoff und 0,1 bis 15 Gew.-Teile, vorzugsweise 1 bis 12 Gew.-Teile, besonders bevorzugt 2 bis 10 Gew.-Teile und ganz besonders bevorzugt 3 bis 8 Gew.-Teile an mindestens einer Verbindung der Formel (I) und gegebenenfalls ein oder mehrere der oben angegebenen Zusatzstoffe in den für diese Zusatzstoffe angegebenen Mengen eingesetzt.

Alternativ können die erfindungsgemäßen Kautschukmischungen hergestellt werden indem mindestens eine Verbindung der Formel (I) mit x = 2 bei einer Temperatur von 100 bis 200°C, vorzugsweise 130 bis 180°C mit Schwefel und mindestens einem Kautschuk und mindestens einem Füllstoff vermischt werden. Bei diesem Alternativverfahren erfolgt in situ der Einbau von weiteren Schwefelatomen in die Verbindung der Formel (I) mit x = 2, wodurch sich die erfindungsgemäßen Verbindungen der Formel (I) mit x = 2 bis 8 und einem Zahlenmittelwert von x = 4 bilden.

Die Herstellung der erfindungsgemäßen Kautschukmischungen erfolgt in üblicher Weise in bekannten Mischaggregaten, wie Walzen, Innenmischern und Mischextrudern bei Massetemperaturen von 60 bis 200°C, vorzugsweise 100 bis 200°C und bei Scherraten von 1 bis 1000 sec⁻¹.

Die Zugabe der Verbindungen der Formel (I) sowie die Zugabe der Füllstoffe erfolgt bevorzugt im ersten Teil des Mischprozesses bei Massetemperaturen von 60 bis 200°C, vorzugsweise 100 bis 200°C und den erwähnten Scherraten. Sie kann jedoch auch in späteren Teilen des Mischprozesses bei tieferen Temperaturen (40 bis 130°C, vorzugsweise 40 bis 100°C) z.B. zusammen mit Schwefel und Vulkanisationsbeschleunigern erfolgen.

Ein weiterer Gegenstand der vorliegenden Erfindung ist ein Verfahren zur Vulkanisation der erfindungsgemäßen Kautschukmischungen, welche bevorzugt bei Massetemperaturen von 100 bis 200 °C, besonders bevorzugt bei 130 bis 180 °C durchgeführt wird. In einer bevorzugten Ausführungsform geschieht die Vulkanisation bei einem Druck von 10 bis 200 bar.

Die vorliegende Erfindung umfasst auch Kautschukvulkanisate erhältlich durch Vulkanisation der erfindungsgemäßen Kautschukmischungen. Diese Vulkanisate weisen insbesondere bei Anwendung in Reifen die Vorteile eines hervorragenden Eigenschaftsprofils und einen unerwartet niedrigen Rollwiderstand auf.

Die erfindungsgemäßen Kautschukvulkanisate eignen sich zur Herstellung von Formkörpern mit verbesserten Eigenschaften, z.B. für die Herstellung von Kabelmänteln, Schläuchen, Treibriemen, Förderbändern, Walzenbelägen, Reifen, Schuhsohlen, Dichtungsringen und Dämpfungselementen, besonders bevorzugt zur Herstellung von Reifen.

Ein weiterer Gegenstand der vorliegenden Erfindung ist die Verwendung der Verbindungen der Formel (I) zur Herstellung von Kautschukmischungen, und deren Vulkanisaten.

### Beispiele

Die Erfindung soll anhand der folgenden Beispiele erläutert werden, ohne diese jedoch darauf zu beschränken.

### Bestimmung der Eigenschaften von Kautschukmischung bzw. Vulkanisaten:

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A mittels eines digitalen Shore-Härte-Testers (Zwick GmbH & Co. KG, Ulm) bestimmt wurden. Die Härte eines Kautschukvulkanisates gibt einen ersten Hinweis über dessen Steifigkeit wieder.

### Zugversuch:

Der Zugversuch dient direkt zur Ermittlung der Belastungsgrenzen eines Elastomers und erfolgt nach DIN 53504. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette. Der Verlustfaktor tan δ wird dabei indirekt über das Verhältnis zwischen Verlustmodul G" und Speichermodul G' bestimmt. Der Verlustfaktor tan δ bei 60 °C geht mit dem Rollwiderstand einher und sollte möglichst niedrig sein. Der Verlustfaktor tan δ bei 0 °C geht mit der Nasshaftung einher und sollte möglichst hoch sein.

**Liste der Einsatzstoffe, Abkürzungen und Hersteller**

| Bezeichnung/Handelsname | Erläuterung | Hersteller/Vertrieb |
|---|---|---|
| BUNA^{®} VSL 4526-2 HM | SBR-Kautschuk | ARLANXEO Deutschland GmbH |
| BUNA^{®} CB 24 | BR-Kautschuk | ARLANXEO Deutschland GmbH |
| VULKASIL^{®} S | Kieselsäure, spez. Oberfläche 175 m²/g | LANXESS Deutschland GmbH |
| ZINKWEISS ROTSIEGEL | Zinkoxid | Grillo Zinkoxid GmbH |
| CORAX^{®} N 339 | Ruß, spez. Oberfläche 90 m²/g | Evonik Industries AG |
| TUDALEN^{®} 1849-2 | Mineralöl | Hansen&Rosenthal KG |
| VULKANOX^{®} 4020/LG | N-1,3-Dimethylbutyl-N-phenyl-p-phenylendiamin | LANXESS Deutschland GmbH |
| VULKANOX^{®} HS/LG | 2,2,4-Trimethyl-1,2-dihydrochinolin oligomerisiert | LANXESS Deutschland GmbH |
| ANTILUX^{®} 654 | Lichtschutzwachs | LANXESS Deutschland GmbH |
| TESPT (SI 69) | Bis(triethoxysilylpropyl)tetrasulfid | Evonik Industries AG |
| DM-C13-EO-SiPT Formel (Ia) | Bis[penta(ethyleneoxy)-tridecanoyldimethylsilylpropyl]polysulfid | erfindungsgemäß |
| DM-C13-EO-SiBT Formel (Ib) | Bis[penta(ethyleneoxy)-tridecanoyldimethylsilylisobutylpropyl]polysulfid | erfindungsgemäß |
| RHENOGRAN^{®} DPG-80 | 1,3-Diphenylguanidin | LANXESS Deutschland GmbH |
| VULKACIT^{®} CZ/C | N-cyclohexyl-2-benzothiazolsulfenamid | LANXESS Deutschland GmbH |
| PALMERA^{®} A9818 | Stearinsäure | |
| VULCUREN^{®} | 1,6-bis(N ,N-dibenzylthiocarbamoyldithio)-hexane | LANXESS Deutschland GmbH |

### Herstellung der Organosilylpolysulfide

Beispiel 1a: Herstellung von Bis[penta(ethyleneoxy)-tridecanoyl-dimethylsilylpropyl]polysulfid Es wurden wurden 28,54 g (0,5 Mol) Natriumpolysulfid in wasserfreiem Methanol vorlegt und unter inerten Bedingungen zum Sieden erhitzt. Dann wurden 555,31 g (1,0 Mol) Penta(ethyleneoxy)-tridecanoyl-dimethylsilylpropylchlorid zugegeben und die Reaktionsmischung für 1,5 Stunden am Rückfluß erhitzt.

Nach erfolgter Umsetzung wurde das abgeschiedene Natriumchlorid abfiltriert und das Lösungsmittel Methanol im Vakuum abdestilliert. Der Destillationsrückstand enthielt das Bis[penta(ethyleneoxy)-tridecanoyl-dimethylsilylpropyl]polysulfid .

Ausbeute: 83 % d.Theorie

### Beispiel 1b: Herstellung von Bis[penta(ethyleneoxy)-tridecanoyl-dimethylsilylisobutyl]-polysulfid

Analog zu Beispiel 1a erfolgte die Herstellung von Bis[penta(ethyleneoxy)-tridecanoyldimethylsilylisobutylpropyi]polysulfid wobei jedoch anstelle von 1,0 Mol Penta(ethyleneoxy)-tridecanoyl-dimethylsilylpropylchlorid 1,0 Mol (569,34 g) Penta(ethyleneoxy)-tridecanoyldimethylsilylisobutylchlorid eingesetzt wurde.

Ausbeute: 81 % d. Theorie.

### Herstellung der Ausgangsverbindungen

### Beispiel 1c: Herstellung von Penta(ethyleneoxy)-tridecanoyl-dimethylsilylpropylchlorid

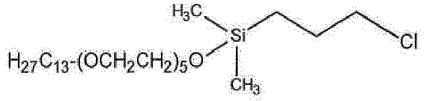

In einem Reaktionsgefäß wurden 0,0249 g des Ruthenium-Katalysators Ru₃(CO)₁₂ (100 ppm Ru) und 282,49 g (0,590 Mol) Penta(ethyleneoxy)-tridecanoyl-dimethylsilan vorgelegt. Die Reaktionsmischung wurde auf 76 °C am Rückfluss erhitzt und über einen Zeitraum von 30 Minuten 28,16 g (0,368 Mol) Allylchlorid (Fa. Sigma-Aldrich (CAS-Nr.: 107-05-1) zugetropft. Nachdem die Reaktionsmischung für weitere 90 Minuten bei 80°C erhitzt wurde konnte mittels gaschromatographischer Analyse ein vollständiger Umsatz des Allylchlorids festgestellt werden. Die Zielverbindung wurde nach destillativer Aufreinigung im Hochvakuum mit einer Ausbeute von 94% d.Th. erhalten.

### Beispiel 1d: Herstellung von Penta(ethyleneoxy)-tridecanoyl-dimethylsilylisobutyl-propylchlorid

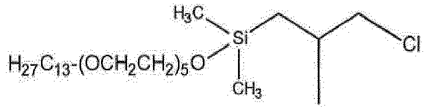

In einem Reaktionsgefäß wurden 0,0249 g des Ruthenium-Katalysators Ru₃(CO)₁₂ (100 ppm Ru) und 282,49 g (0,590 Mol) Penta(ethyleneoxy)-tridecanoyl-dimethylsilan vorgelegt. Die Reaktionsmischung wurde auf 76 °C am Rückfluss erhitzt und über einen Zeitraum von 30 Minuten 3,32 g (0,368 Mol) Isobutenchlorid (Fa. Sigma-Aldrich (CAS-Nr.: 563-47-3)) zugetropft. Nachdem die Reaktionsmischung für weitere 90 Minuten bei 80°C erhitzt wurde konnte mittels gaschromatographischer Analyse ein vollständiger Umsatz des Allylchlorids festgestellt werden. Die Zielverbindung wurde nach destillativer Aufreinigung im Hochvakuum mit einer Ausbeute von 92% d. Th. erhalten.

### Beispiel 1e: Herstellung von Penta(ethyleneoxy)-tridecanoyl-dimethylsilan

94,62 g (1,0 Mol) Chlordimethylsilan (CAS- Nr..: 1066-35-9) (Firma Sigma-Aldrich) wurden in einem Reaktionsgefäß vorgelegt und am Rückfluss auf 70 °C erwärmt. Dann wurden 462,69 g (1,1 Mol) wasserfreies Lutensol TO5 (Firma BASF) über einen Zeitraum von 4,5 Stunden zu dosiert. Das dabei entstehende HCl-Gas wurde über den Kühler in eine HCl-Falle (Wasser + NaOH) geleitet. Anschließend wurde die Reaktionsmischung für eine weitere Stunde bei 80°C unter Stickstoffatmosphäre gerührt.

Das Penta(ethyleneoxy)-tridecanoyl-dimethylsilan wurde so in einer Ausbeute von 96 % d. Th. erhalten.

### Herstellung der Kautschukmischungen

### Beispiel 1

Es wurden jeweils die erfindungsgemäßen Kautschukmischungen A und B sowie die nicht erfindungsgemäße Kautschukmischung Vergleich 1 gemäß den Rezepturen wie in Tabelle 1 angegeben hergestellt. Dabei wurden die Verbindung Bis(triethoxysilylpropyl)tetrasulfid (TESPT) und die Verbindungen der Formeln (Ia) und (Ib) jeweils in äquimolaren Mengen eingesetzt. Zum Erreichen einer vergleichbaren Vernetzungsdichte wurde jedoch bei den Verbindungen der Formeln (Ia) und (Ib) eine etwas höhere Schwefelmenge zudosiert. Die Mischungen wurden im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 30 Minuten lang auf 170°C erhitzt.

Die Prüfung der Eigenschaften der Kautschukmischungen und Vulkanisate der Mischungen A, B und Vergleich 1 erfolgte nach den oben angegebenen Methoden.

Aus den Prüfdaten geht hervor, dass die erfindungsgemäßen Kautschukmischungen der Beispiele A und B eine deutlich geringere Mischungsviskosität aufweisen und damit zu einer wesentlich vorteilhafteren Herstellung der Vulkanisate als mit der nicht erfindungsgemäßen Kautschukmischung des Vergleich 1 führen.

Neben der verbesserten Herstellbarbeit der Vulkanisate zeigen die erfindungsgemäßen Kautschukmischungen auch eine Verbesserung der dynamischen Dämpfung bei 60°C (gemessen als Verlustfaktor tan δ), welche mit dem Rollwiderstand eines Reifens korreliert, wobei niederigere Werte vorteilhaft sind. Zudem ist überraschend, dass einer der großen Nachteile von Kautschukmischungen mit dem Additiv TESPT, nämlich der sogenannte Marching Modulus der Vernetzungskurve, bei den erfindungsgemäßen Kautschukmischungen A und B nicht auftritt, Dies bedeutet eine Vereinfachung bei der Festlegung der Ausvulkanisationszeit ohne ständige Veränderung mechanisch-dynamischer Vulkanisateigenschaften. Weitere Vorteile bei der Herstellung (Vulkanisation) von Formkörpern können sich aus der verkürzten Ausvulkanisationszeit (t95) der erfindungsgemäßen Kautschukmischungen ergeben.

**Tabelle 1**

| Rezeptur | Vgl.1 | A | B |
|---|---|---|---|
| BUNA^{®} VSL 4526-2 HM | 96 | 96 | 96 |
| BUNA^{®} CB 24 | 30 | 30 | 30 |
| VULKASIL^{®} S | 80 | 80 | 80 |
| Stearinsäure | 1 | 1 | 1 |
| Zinkoxid | 2,5 | 2,5 | 2,5 |
| Ruß CORAX^{®} N 339 | 6,4 | 6,4 | 6,4 |
| TUDALEN^{®®} 1849-2 | 8 | 8 | 8 |
| VULKANOX^{®®} HS/LG | 1 | 1 | 1 |
| VULKANOX^{®®} 4020/LG | 1 | 1 | 1 |
| ANTILUX^{®} 654 | 1,5 | 1,5 | 1,5 |
| TESPT | 6,4 | - | - |
| DM-C13EO-SiBT | - | 14,2 | - |
| DM-C13EO-SiPT | - | - | 13,9 |
| | | | |

| Auf der Walze / 50 C: | | | |
|---|---|---|---|
| VULKACIT^{®} CZ/C | 1,5 | 1,5 | 1,5 |
| RHENOGRAN^{®} DPG-80 | 2,5 | 2,5 | 2,5 |
| Schwefel | 1,5 | 2,1 | 2,1 |
| Ausvulkanisationszeit T95 (s) | 1157 | 517 | 344 |
| Mooney-Viskosität, ML1 +4 (5. Mischstufe) | 98 | 52 | 57 |
| | | | |

| Mechanische Eigenschaften: | | | |
|---|---|---|---|
| Festigkeit (MPa) | 20,1 | 18,3 | 17,0 |
| Bruchdehnung (%) | 356 | 524 | 425 |
| Elastizität (60°C) | 55 | 58 | 59 |
| tan δ (0°C) | 0,455 | 0,463 | 0,450 |
| tan δ (60°C) | 0,117 | 0,114 | 0,104 |

### Beispiel 2

Es wurden jeweils die erfindungsgemäßen Kautschukmischungen C und D sowie die nicht erfindungsgemäße Kautschukmischung Vergleich 1 gemäß, den Rezepturen wie in Tabelle 2 angegeben, hergestellt. Dabei wurden die Verbindung Bis(triethoxysilylpropyl)tetrasulfid (TESPT) und die Verbindungen der Formeln (la) und (Ib) jeweils in äquimolaren Mengen eingesetzt. Zum Erreichen einer vergleichbaren Vernetzungsdichte wurde jedoch bei den Verbindungen der Formeln (la) und (Ib) eine etwas höhere Schwefelmenge zudosiert.

Weiterhin wurden bei den erfindungsgemäßen Kautschukmischungen C und D der Sekundärbeschleuniger DPG jeweils durch VULCUREN^{®} ersetzt.

Die Mischungen wurden im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 30 Minuten lang auf 170°C erhitzt.

Die Prüfung der Eigenschaften der Kautschukmischungen und Vufkanisate der Mischungen C, D und Vergleich 1 erfolgte nach den oben angegebenen Methoden.

Aus den Prüfdaten geht hervor, dass bei Verwendung von VULCUREN^{®} als DPG-Ersatz bei den erfindungsgemäßen Kautschukmischungen C und D nach der ersten Mischstufe (5-stufiger Mischprozess) eine geringere Mischungsviskosität mit verbesserter Scorchsicherheit (längere Scorch-Zeit) gegenüber der nicht erfindungsgemäßen Kautschukmischung des Vergleich 1 erreicht wird. Die Ausvulkanisationszeit T95 im Vergleich zu Vergleich 1 wurde deutlich verkürzt.

Das mechanische Eigenschaftsprofil der erfindungsgemäßen Compounds wie die Zugfestigkeit blieb bei Substitution von DPG durch VULCUREN^{®} weitgehend unbeeinträchtigt. Die Rückprallelastizität bei 60°C wird deutlich erhöht einhergehend mit einem kleineren Verlustfaktor tan delta bei 60°C. Diese Verbesserung ist ein Indikator für einen geringeren Rollwiderstand.

**Tabelle 2**

| Rezeptur | Vgl.1 | C | D |
|---|---|---|---|
| BUNA^{®} VSL 4526-2 HM | 96 | 96 | 96 |
| BUNA^{®} CB 24 | 30 | 30 | 30 |
| VULKASlL^{®} S | 80 | 80 | 80 |
| Stearinsäure | 1 | 1 | 1 |
| Zinkoxid | 2,5 | 2,5 | 2,5 |
| Ruß CORAX^{®} N 339 | 6,4 | 6,4 | 6,4 |
| TUALEN^{®} 1849-2 | 8 | 8 | 8 |
| VULKANOX^{®} HS/LG | 1 | 1 | 1 |
| VULKANOX^{®} 4020/LG | 1 | 1 | 1 |
| ANTILUX^{®} 654 | 1,5 | 1,5 | 1,5 |
| TESPT | 6,4 | - | - |
| DM-C13EO-SiBT | - | 14,2 | - |
| DM-C13EO-SiPT | - | - | 13,9 |

| Auf der Walze / 50 C: | | | |
|---|---|---|---|
| VULKACIT^{®} CZ/C | 1,5 | 1,5 | 1,5 |
| RHENOGRAN^{®} DPG-80 | 2,5 | 0 | 0 |
| VULCUREN^{®} | 0 | 0.4 | 0.4 |
| Schwefel | 1,5 | 2,1 | 2,1 |
| | | | |
| Ausvulkanisationszeit T95 (s) | 1157 | 460 | 407 |
| Mooney-Viskosität, ML1+4 (1. Mischstufe) | 140 | 106 | 99 |
| Mooney Scorch 130°C (s) | 1279 | 1581 | 1170 |

| Mechanische Eigenschaften: | | | |
|---|---|---|---|
| Festigkeit (MPa) | 20,1 | 16,6 | 21,1 |
| Bruchdehnung (%) | 356 | 512 | 513 |
| Elastizität (60°C) | 54 | 55 | 60 |
| tan δ (0°C) | 0,455 | 0,476 | 0,439 |
| tan δ (60°C) | 0,117 | 0,113 | 0,098 |

### Fazit:

Mit den erfindungsgemäßen Organosilylpolysulfiden der Formel (I) lassen sich erfindungsgemäße Kautschukmischungen herstellen, die sich durch verbesserte Mischungseigenschaften bei gleichzeitig höherer Festigkeit und deutlich erhöhter Elastizität (bei 60°C) der daraus hergestellten Vulkanisate auszeichnen. Weiterhin zeichnen sich die aus den Vulkanisaten hergestellten Reifen durch und einen geringen Rollwiderstand aus.

## Patentansprüche

1. Verbindungen der Formel (I) 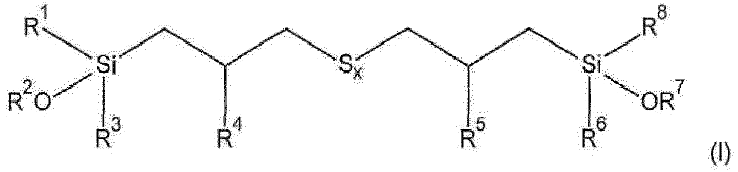 worin
R¹, R³, R⁶ und R⁸ gleich oder verschieden sind und für C₁-C₄-Alkyl stehen, R⁴ und R⁵ gleich oder verschieden sind und für Wasserstoff oder C₁-C₄-Alkyl stehen,
R² und R⁷ für einen Rest der Formel (A)
H₂₇C₁₃-(OCH₂-CH₂)ₙ- (A)
stehen,
worin
n für eine ganze Zahl von 1 bis 9, bevorzugt von 2 bis 8 und besonders bevorzugt für 5 steht
und
x für eine ganze Zahl von 2 bis 8 steht.

2. Verbindungen gemäß Anspruch 1, **dadurch gekennzeichnet, dass** in Formel (I) R¹, R³, R⁶ und R⁸ gleich oder verschieden sind und für Methyl oder Ethyl stehen, R⁴ und R⁵ gleich oder verschieden sind und für Wasserstoff, Methyl oder Ethyl stehen, R² und R⁷ für einen Rest der Formel (A) stehen,
worin
n für eine ganze Zahl von 2 bis 8, besonders bevorzugt für 5 steht
und
x für eine ganze Zahl von 2 bis 8 steht.

3. Verbindungen gemäß Anspruch 1 oder 2, **dadurch gekennzeichnet, dass** sie der Formel 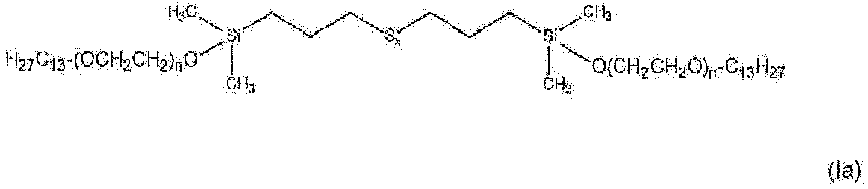 worin
x für eine ganze Zahl von 2 bis 8 steht,
und
n für 5 steht,
oder der Formel 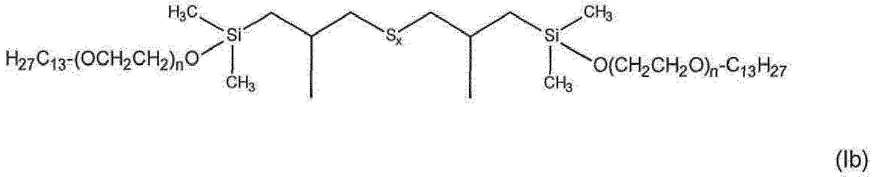 worin
x für eine ganze Zahl von 2 bis 8 steht, und
n für 5 steht,
entsprechen.

4. Mischungen enthaltend mindestens zwei Organosilylpolysulfide der Formel (I) gemäß Anspruch 1, worin die Substituenten R¹ bis R⁸ und x die in Anspruch 1 angegebenen Bedeutungen haben und die sich zumindest in dem Wert von x voneinander unterscheiden, wobei der Zahlenmittelwert x̅ der Anzahl x der Schwefelatome 3,6 bis 4,4, bevorzugt 3,8 bis 4,2 und insbesondere 4,0 beträgt.

5. Verfahren zur Herstellung von Verbindungen gemäß einem der Ansprüche 1 bis 3 oder Mischungen gemäß Anspruch 4, **dadurch gekennzeichnet, dass** man mindestens zwei Halogenalkylsilylether der Formel (II) 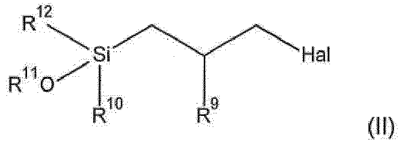 worin
R⁹ für einen Rest R⁴ oder R⁵ steht,
R¹⁰ für einen Rest R³ oder R⁶ steht,
R¹¹ für einen Rest R² oder R⁷ steht und
R¹² für einen Rest R¹ oder R⁸ steht,
wobei die Reste R¹ bis R⁸ die in Anspruch 1 angegebenen Bedeutungen haben und
Hal für Halogen steht,
mit mindestens einem Metallpolysulfid der Formel (III)
SₓM₂ (III)
worin
x die in Anspruch 1 angegebene Bedeutung hat,
und
M für ein Metallion aus der Reihe Lithium, Natrium und Kalium steht,
in Gegenwart von mindestens einem alkoholischen Lösungsmittel umsetzt.

6. Halogenalkylsilylether der Formel (II) 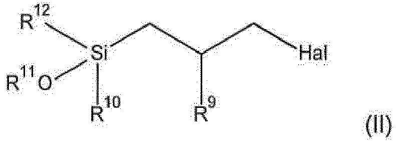 worin
R⁹ für einen Rest R⁴ oder R⁵ steht,
R¹⁰ für einen Rest R³ oder R⁶ steht,
R¹¹ für einen Rest R² oder R⁷ steht und
R¹² für einen Rest R¹ oder R^{B} steht,
wobei die Reste R¹ bis R⁸ die in Anspruch 1 angegebenen Bedeutungen haben
und
Hal für Halogen steht.

7. Kautschukmischung enthaltend mindestens einen Kautschuk, mindestens einen Füllstoff, sowie mindestens eine Verbindung der Formel (I) gemäß einem der Ansprüche 1 bis 3.

8. Kautschukmischung gemäß Anspruch 7, **dadurch gekennzeichnet, dass** sie insgesamt 0,1 bis 18 Gew-Teile, vorzugsweise 1 bis 17 Gew.-Teile, besonders bevorzugt 2 bis 16 Gew.-Teile und ganz besonders bevorzugt 3 bis 15 Gew.-Teile an Verbindungen der Formel (I) und 10 bis 190 Gew.-Teile, vorzugsweise 30 bis 150 Gew.-Teile und besonders bevorzugt 50 bis 130 Gew.-Teile an mindestens einem Füllstoff, jeweils bezogen auf 100 Gew.-Teile der Gesamtmenge an Kautschuk, enthält.

9. Kautschukmischung gemäß Anspruch 7 oder 8, **dadurch gekennzeichnet, dass** sie mindestens einen SBR-Kautschuk in Form von Styroi/Butadien-Copolymerisaten mit Styrolgehalten von 1 bis 60, vorzugsweise 20 bis 50 Gew-%, bevorzugt einen funktionalisierten SBR-Kautschuk, ggf. einen oder mehrere BR-Kautschuke und/oder mindestens einen Naturkautschuk (NR) enthält.

10. Kautschukmischung gemäß einem der Ansprüche 7 bis 9, **dadurch gekennzeichnet, dass** sie mindestens einen hydroxylgruppenhaltigen oxidischen Füllstoff aus der Reihe der Kieselsäuren, mit einer spezifischen Oberfläche (BET gemessen nach DIN 66131) von 5 bis 1000, vorzugsweise 20 bis 400 m²/g und mit Primärteilchengrößen von 100 bis 400 nm, wobei die Kieselsäuren gegebenenfalls auch als Mischoxide mit anderen Metalloxiden, wie Al-, Mg-, Ca-, Ba-, Zn-, Zr-, Ti-oxiden vorliegen, und der synthetischen Silikate, wie Aluminiumsilikat, Erdalkalisilikate wie Magnesiumsilikat oder Calciumsilikat, mit spezifischen Oberflächen (BET gemessen nach DIN 66131) von 20 bis 400 m²/g und Primärteilchendurchmessern von 10 bis 400 nm; enthält.

11. Kautschukmischung gemäß einem der Ansprüche 7 bis 10, **dadurch gekennzeichnet, dass** sie mindestens einen Ruß mit einer spezifischen Oberfläche (BET gemessen nach DIN 66131) im Bereich von 20 bis 200 m²/g enthält.

12. Kautschukmischung gemäß einem der Ansprüche 7 bis 11, **dadurch gekennzeichnet, dass** sie mindestens einen Vernetzer aus der Reihe der Schwefel und Schwefelspender und der Metalloxide enthält.

13. Kautschukmischung gemäß einem der Ansprüche 7 bis 12, **dadurch gekennzeichnet, dass** sie mindestens einen Vulkanisationsbeschleuniger aus der Reihe der Mercaptobenzthiazole, Mercaptosulfenamide, Thiocarbamate, Thiocarbonate und Dithiophosphate sowie der Schwefelspender wie Dithiodicaprolactame, Dithiodimorpholine und Xanthogenate enthält.

14. Kautschukmischung gemäß einem der Ansprüche 7 bis 13, **dadurch gekennzeichnet, dass** sie mindestens einen Sekundärbeschleuniger aus der Reihe 1,6-bis(N,N-dibenzylthiocarbamoyldithio)-hexan, TBzTD (Tetrabenzylthiuram-disulfid) und Dithiophosphat enthält.

15. Kautschukmischung gemäß einem der Ansprüche 7 bis 14, **dadurch gekennzeichnet, dass** sie einen Gehalt an Diphenylguanidin und/oder substituierten Diphenylguanidinen von maximal 0,4 Gew.-Teilen, vorzugsweise von 0,1 bis 0,2 Gew.-Teilen, besonders bevorzugt von 0,05 bis 0.1 Gew.-Teilen und ganz besonders bevorzugt von 0,001 bis 0,04 Gew.-Teilen aufweisen, jeweils bezogen auf 100 Gewichtsteile der Gesamtmenge an Kautschuk aufweist.

16. Verfahren zur Herstellung einer Kautschukmischung gemäß einem der Ansprüche 7 bis 15, **dadurch gekennzeichnet, dass** man mindestens einen Kautschuk mit mindestens einem Füllstoff und mindestens einer Verbindung der Formel (I) gemäß einem der Ansprüche 1 bis 3 mischt und die Mischung auf eine Temperatur im Bereich von 60 bis 200°C, bevorzugt von 90 bis 180°C erhitzt.

17. Verfahren zur Herstellung einer Kautschukmischung nach einem der Ansprüche 7 bis 15, **dadurch gekennzeichnet, dass** man mindestens einen Kautschuk, mindestens einen Füllstoff und mindestens eine Verbindung der Formel (I) gemäß Anspruch 1, worin x für 2 steht, zusammen mit Schwefel bei einer Temperatur im Bereich von 100 bis 200°C, vorzugsweise von 130 ° bis 180°C, miteinander vermischt.

18. Verfahren zur Herstellung von Kautschukvulkanisaten durch Vulkanisation einer Kautschukmischung gemäß einem der Ansprüche 7 bis 15, bevorzugt bei einer Temperatur im Bereich von 100 bis 250 °C, besonders bevorzugt von 130 bis 180 °C.

19. Verwendung einer Kautschukmischung gemäß einem der Ansprüche 7 bis 15 zur Herstellung von Vulkanisaten.

20. Vulkanisate, erhältlich durch Vulkanisation einer Kautschukmischung gemäß einem der Ansprüche 7 bis 15.

21. Formkörper, insbesondere Reifen enthaltend ein oder mehrere Vulkanisate gemäß Anspruch 20.

22. Verwendung von Verbindungen der Formel (I) gemäß einem der Ansprüche 1 bis 3 zur Herstellung von Kautschukmischungen gemäß einem der Ansprüche 7 bis 15, Vulkanisaten gemäß Anspruch 20 oder Formkörpern gemäß Anspruch 21.
